# EUROPEAN PATENT APPLICATION

(11) **EP 1 724 603 A2**
(43) Date of publication of application: **22.11.2006**
(21) Application number: 06252041.6
(22) Date of filing: 12.04.2006
(51) Int. Cl.: G01S 5/00

(54) **System, method and computer program product for user interface operations for ad-hoc sensor node tracking**

(30) Priority: 17.05.2005 US 131815
(71) Applicant: Hitachi, Ltd., Tokyo (JP)
(72) Inventor: Simons, John, c/o Hitachi Ltd., Int. Prop. Group, Chiyoda-ku Tokyo 100-8220 (JP); Brown, Blake, c/o Hitachi Ltd., Int. Prop. Group, Chiyoda-ku Tokyo 100-8220 (JP); Haigh, Stephen, c/o Hitachi Ltd., Int. Prop. Group, Chiyoda-ku Tokyo 100-8220 (JP)
(74) Representative: Calderbank, Thomas Roger

(57) **Abstract**

A monitoring system and a method and computer program product for implementing a monitoring system are disclosed. In accordance with an embodiment of the system, information about locations of reference nodes in an area may be received. Utilizing the information about the locations of the reference nodes, graphical representations of the reference nodes may be presented in a graphical representation of the area at locations corresponding to the locations of the reference nodes in the area. At least one node in the area may be monitored so that, based on the monitoring, a graphical representation of the node may be displayed in the graphical representation of the area at a location corresponding to the location of the node.

## Description

Embodiments of the present invention relate to position tracking and monitoring and, more particularly, systems and user interfaces for position tracking and monitoring.

Three dimensional (3D) location technology is becoming more and more mainstream. With the development of Ultra-Wide Band 3D location technology algorithms, too much data is making it harder to visualize/analyze by a user. As a result, dynamic 3D location visualization and analysis is needed to help a user more easily comprehend the presented data.

A monitoring system and a method and computer program product for implementing a monitoring system are disclosed. In accordance with an embodiment of the system, information about locations of reference nodes in an area may be received. Utilizing the information about the locations of the reference nodes, graphical representations of the reference nodes may be presented in a graphical representation of the area at locations corresponding to the locations of the reference nodes in the area. At least one node in the area may be monitored so that, based on the monitoring, a graphical representation of the node may be displayed in the graphical representation of the area at a location corresponding to the location of the node.

In one embodiment, the reference nodes may be utilized to obtain information about the locations of the reference nodes and for monitoring the node as well. In another embodiment, the information about the locations about the reference nodes may be utilized to scale the graphical representation the area.

The graphical representation of the area may comprise a three-dimensional representation of the area. As another option, the graphical representation of the area may be taken from a viewpoint of the node.

The monitoring of the node may be implemented in a variety of ways. For example, the monitoring may include monitoring the position of the node in the area. As another example, the monitoring may include obtaining information sensed by at least one sensor in the node. In such an implementation, the information sensed by the sensor may be associated with positioning information about the node obtained during the monitoring.

In one embodiment, the system may permit the association of at least one attribute with the node. In another embodiment, the system may permit the association of a trigger with the node. When the trigger is tripped, an alert may be presented. In such an embodiment, information obtained from the monitoring may be utilized to determine when and whether the trigger is tripped.

The monitoring of the node may include monitoring the node to determine whether the node is stationary for a defined duration. If the monitoring indicates that the node has been stationary for a period of time equal to (or longer than) the defined duration, then a notification may be presented. The monitoring of the node may also include monitoring the node for movement from a given location in the area. If monitoring indicates that the node has moved from the location in the area, then a notification may be presented.

In one embodiment, a graphical representation of a trail may be displayed to indicate a path taken by the node during the monitoring. In such an implementation, it may be permitted to adjust the length of the displayed trail. It may also be permitted to add annotations to the graphical representation of the trail.

Information obtained during the monitoring may be utilized to compute a path from the node to another location in the area. The path may then be displayed in the graphical representation of the area. Information about one or more obstacles located in the area may be utilized in the computation of the path. Also, directional information may be presented to a user located at the node to permit the user to follow the path.

IN THE DRAWINGS:
Figure 1 is a flowchart of a process for implementing a monitoring system in accordance with various embodiments;
Figure 2 is a schematic block diagram of an exemplary monitoring system in accordance with an illustrative embodiment;
Figure 3 is a schematic block diagram of an illustrative monitoring engine in accordance with an exemplary embodiment;
Figure 4 is a schematic block diagram of an illustrative node in accordance with an exemplary embodiment;
Figure 5 is a schematic representation of an illustrative graphical user interface with a map display area presenting a side view in a semi-transparent mode in accordance with an exemplary embodiment;
Figure 6 is a schematic representation of an illustrative graphical user interface with a map display area presenting a front view in a wire-frame mode in accordance with an exemplary embodiment;
Figure 7 is a schematic representation of an illustrative graphical user interface with a map display area presenting a perspective view of one floor of a building in a wire-frame mode in accordance with an exemplary embodiment;
Figure 8 is a schematic representation of an illustrative graphical user interface with a map display area presenting a zoomed in perspective view in semi-transparent mode in accordance with an exemplary embodiment;
Figure 9 is a schematic diagram of an illustrative scene/building hierarchal tree list of a graphical user interface in accordance with an exemplary embodiment;
Figure 10 is a schematic diagram of an illustrative object hierarchal tree list and an illustrative object attribute hierarchal tree list of a graphical user interface in accordance with an exemplary embodiment;
Figure 11 is a schematic diagram of an illustrative object trail hierarchal tree list of a graphical user interface in accordance with an exemplary embodiment;
Figure 12 is a schematic diagram of an illustrative object alignment dialog of a graphical user interface in accordance with an exemplary embodiment; and
Figure 13 is a schematic diagram of an illustrative view toolbar of a graphical user interface in accordance with an exemplary embodiment.

### OVERVIEW

Many applications can benefit from the capability to track the location and monitor the status of people and equipment in real-time. Examples of these applications include (but are not limited to) fire and rescue services, hospitals, manufacturing facilities, warehouses, security, and the military. Today's transceiver technology can identify the three dimensional (3D) location of the transceiver as well as send and receive a wide variety of information such as (but not limited to) heart rate, ambient temperature, text messages, audio, images and video. The technology supporting these transceivers has been and will continue to dramatically improve regarding smaller size, lower cost, more accurate positioning, lower power, wider ranges, better coverage in urban environments and higher bandwidth for data / information interchange.

Managing and interpreting the current and historical data generated by the transceivers may be important in order to provide useful, reliable and timely feedback and control. Oftentimes, this can be problematic due to the large amount of data and the real-time nature required by many of the potential applications.

Embodiments of a monitoring system are described for monitoring a monitored area. In a monitoring system, mobile wireless sensor nodes (e.g., transceivers) allow objects to be tracked in three-dimensional space, such as inside buildings, for a wide variety of applications including as hospital asset tracking and fire personnel tracking and monitoring. In such a monitoring system, an operator or user may use a computer to manage/monitor the nodes using a graphical user interface.

More specifically, embodiments of the monitoring system are designed to help enable an operator to view and interpret the real-time position of transceivers (people, equipment, alarms, etc) and their associated data (temperature, smoke level, text, images, audio, video, etc) in an intuitive graphical 3D modeling environment. The current position and status of the transceivers and the historical position/status (as referred to as a "trail") may be viewed in the 3D context of a model of the building or scene. These help an operator to quickly and accurately assess the environment and interactively help guide and instruct people in the field.

For example, using a firefighting scenario as an illustration, an operator may use a graphical user interface of the monitoring system to help a fireman locate: (1) the nearest exit in a building; (2) another fireman in the building; (3) a signaling alarm; (4) an injured or trapped civilian in the building; (5) a stairwell in the building; and/or (6) re-trace path taken by another fireman. The operator and/or an automated system may also be able monitor temperature sensors and feedback from firemen and civilians to help identify safe and dangerous regions in the building. The operator and/or an automated system may also use the monitoring system to help locate and track the usage and position of equipment such as hoses and hydrants, first aid, ropes and heat shields. Further, the operator and/or an automated system may utilize embodiments of the monitoring system to help identify alarm conditions such a high temperature, no movement or lack of signal from a transceiver.

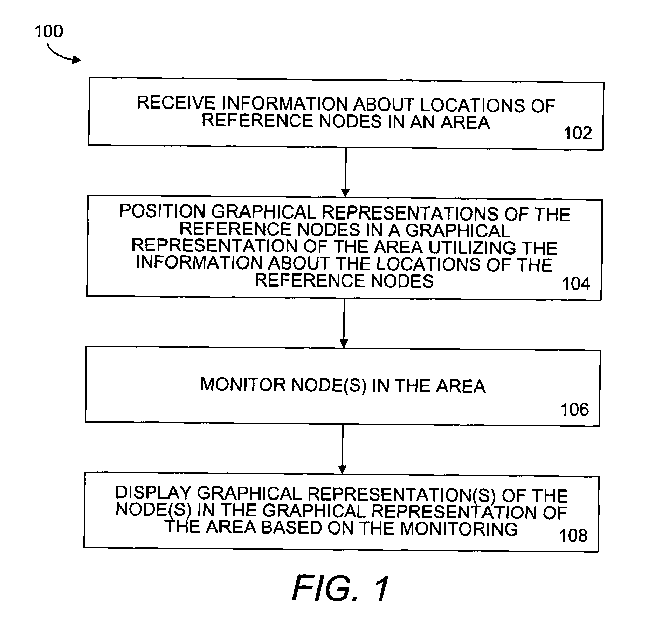

In accordance with various embodiments of the present invention, Figure 1 is a flowchart of a process 100 for implementing a monitoring system (also referred to a position tracking system) for monitoring nodes (including tracking their position) in a monitored area. In operation 102, the system may receive information about the locations of the reference nodes deployed/provided in the area. Utilizing the received information about the locations of the reference nodes, graphical representations of the reference nodes may be positioned in a graphical representation of the area (also referred to as a "map" of the monitored area) at locations corresponding to the actual locations of the reference nodes in the actual area (see operation 104). In operation 106, one or more nodes deployed/located in the area may be monitored by the system to obtain information about each node in the area. Based on the information obtained from the monitoring of the nodes, a graphical representation of each node may be displayed in the graphical representation of the area at locations corresponding to the actual locations of each node in operation 108.

As an option, the reference nodes may be coupled to mounting elements capable of being mounted to a structure in the area to help deployment and proper positioning of the reference nodes in the area. In one implementation, each mounting element may include an elongate rod that has an associated pair of reference nodes coupled to opposite ends of the rod.

With reference to operation, 102, the information about the locations of the reference nodes may be obtained and received from the reference nodes themselves. In one implementation, at least a portion of the information about the locations of the reference nodes may be obtained from communications between the reference nodes themselves. The reference nodes may include wireless transceivers so that the communications between the reference nodes comprise wireless communications. The wireless transceivers of the reference nodes may also be utilized to transmit information to the rest of the system (including the information about the locations of the reference nodes in the area). In another implementation, some or all of the reference nodes may include a global positioning system (GPS) receiver so that at least a portion of the information about the locations of the reference nodes is obtained utilizing the GPS receivers.

The graphical representation of the area may include information about more features and/or attributes of the area (may also be referred to as artifacts of the area) such as, for example: dimensions of the area (e.g., height, width, and depth), a number of floors and/or levels of the area, and/or a number of openings into the area (e.g., doors, windows, access paths, and ducts). With reference to operation 104, the graphical representations of the area (including associated structures of the area) and the reference nodes may be presented in a graphical user interface (and viewable via a visual display, such as a monitor, coupled to the system). In one embodiment, the graphical representation of the area may be stored and retrieved from a database of the system. In such an embodiment, the database may be coupled to a network so that the network may be utilized to access the database (and thereby the graphical representation of the area, etc.).

The information about the locations about the reference nodes received by the system may also be utilized to scale/adjust the size of the graphical representation the area, graphical representations of features/terrain/structures in the area as well as the graphical representations of the reference nodes and monitored nodes. The graphical user interface may also include features for permitting a user to manually scale/adjust the positioning of the graphical representation of a node/reference node in the graphical representation of the area (with or without user of the received location information). As an option, the reference nodes may also be positioned/deployed/provided at known structures or features contained in the area. This way, graphical representations of these structures (included in the graphical representation of the area) may be used to help properly position the graphical representations of the reference nodes in the graphical representation of the area displayed in the graphical user interface.

The graphical representation of the area presented in the graphical user interface may comprise a three-dimensional representation of the area. Similarly, the graphical representations of the nodes (including reference nodes) in the area may also be presented as three dimensional images. Via the graphical user interface, the system may permit a user to selectively change the graphical representation of the area (and the other images displayed therein) between the three-dimensional representation of the area and a two-dimensional graphical representation of the area.

The graphical user interface may include options for permitting presentation of the graphical representation of the area in a semi-transparent format and/or a wire structure format. The system may also permit a user to adjust the graphical representation of the area from a one perspective/viewpoint/position to another perspective via the graphical user interface so that the user may rotate the graphical representation of the area to any perspective/viewpoint/position of the user's choosing. The choice of perspectives may even include a perspective that taken from a viewpoint/vantage point of any user-selected node deployed in the area.

With reference to operation 106, the reference nodes may be utilized to monitor the nodes in the area and provide the system with location information about each node for positioning the graphical representations of the monitored nodes. For example, communications between the reference nodes and the nodes in the area may be utilized for the monitoring of the nodes in the area. These communications may include wireless communications between wireless transceivers in the reference nodes and wireless transmitters/transceivers in the monitored nodes. As a further option, like the reference nodes, some or all of the monitored nodes may include GPS receivers from which additional positioning information may be obtained for use by the system.

The monitoring of the nodes may include monitoring the position of the nodes in the area over a period of time (so that, for example, the position of the nodes in the area may be tracked over time) and/or obtaining sensor information sensed by one or more sensors provided in some or all of the nodes.

Information about the nodes (including position and sensor information) obtained during the monitoring of the nodes in operation 106 may be stored in a database. The information about the nodes obtained during the monitoring may be time-stamped as it is captured and/or stored to facilitate subsequent retrieval of the information and/or association of additional information (i.e., using timestamps to associate information collected at the same point in time together). For example, sensor information sensed by sensor(s) in a node may be associated with positioning information about the node obtained during the monitoring so that stored sensor information obtained can be retrieved for any given position where the node was previously been located. As another example, the position information and sensor information may be associated with a timestamp so that the position and sensor information may be retrieved for any previous point in time that the node was being monitored in the area.

In one embodiment, a user may be permitted to associate and edit information such as attributes to any given node via the graphical user interface. A user may also be permitted to input/edit notes/as well as associate sound and/or video clips to any given node via the graphical user interface. The information input/edited/associated by the user may be stored in the database to help facilitate subsequent retrieval and analysis of the information.

The system may also afford features via the graphical user interface for permitting a user to associate one or more triggers with the node. The system may utilize the information obtained from the monitoring of the node(s) to determine when/whether any given trigger has been tripped and, if so, present the user with an alert via the graphical user interface that indicates the tripping of the trigger to help afford the user an opportunity to take subsequent actions to deal with the events causing the tripping of the trigger. In one implementation, the trigger may be tripped using information obtained from one or more sensors of a node. In some situations it may be beneficial to allow the system to automatically perform actions in response to the tripping of a trigger (ex. turning on a sprinkler system or shutting off electricity in the area proximate to the node generating the trigger).

Such triggers have a variety of applications. For example, in one embodiment, the monitoring of the nodes in operation 106 may include monitoring the node to determine whether any given node has been stationary for at least a user-defined duration and, when it is detected that has been stationary for at least a period of time equal to or exceeding the duration, generate and present a notification to a user (via a graphical user interface) indicating this event. As another example, the monitoring in 106 may include monitoring a given node for movement (e.g., a node that is supposed to remain stationary). In such an implementation, when the monitoring indicates that the node has moved from its original location in the area, a notification may be generated and presented to a user via the graphical user interface.

Using information obtained from the monitoring of the node in operation 106, the system may generate and display (via the graphical user interface) a graphical representation of a trail in the graphical representation of the area that indicates a path taken by a node during monitoring by the system. Via a graphical user interface, the system may permit a user to dynamically adjust the length of the trail so that a portion or all of the node's path may be displayed in the graphical representation of the area. For example, a user may be permitted to adjust the length of a trail to a variety of predefined durations from a current/present time such as: 30 seconds, 1 minute, 5 minutes, 10 minutes and/or some user-defined duration. A user may also be permitted to selectively display a trail that indicates the entire path taken by the node from the time monitoring of the node was initiated (i.e., started). The graphical representation of the trail may also include directional information (e.g., direction arrows) about the direction(s) of the path taken by the node to help a user quickly visualize the direction of movement by the node.

Via the graphical user interface, a user may also be permitted to add annotation(s) to points along the graphical representation of the trail. An annotation may comprise textual information, audio information, and/or video information. When an annotation is made at a point in a path, a corresponding indicator/indication may be displayed at that point to indicate the location of the annotation in the path. This indicator may be user-selectable so that selection of the indication by a user presents the associated annotation to the user.

Information obtained by the system during the monitoring in operation 106, a path (or paths) may be computed from a given node to another location (e.g., an egress from the area or a portion of the area) and/or node in the area. The computed path to the location/other node may then be displayed in the graphical representation of the area. In such an implementation, the computed path may comprise a path with the shortest distance (i.e., shortest length) between the given node and the location/other node. If one or more obstacles are included in the area, the system may utilize information about the obstacle(s) in the computation of the path from between node to the location/other node. The displayed graphical representation of the path may also present directional information to a user (e.g., a user located at the given node) to permit the user to follow the computed path to the location. In another implementation, a user may be permitted to associate one or more triggers to one or more points along the computed path via the graphical user interface. The system may then utilize information obtained from the monitoring to determine whether the trigger is tripped. When the trigger(s) is subsequently tripped, the system may then present an alert to the user via the graphical user interface and/or an alert to the node from which the path was computed. In one embodiment, the system may permit a user to selectively remove a graphical representation of the trail from the graphical representation of the area presented in the graphical user interface to help aid clearer viewing of the area.

In one embodiment, one or more nodes may include a speaker for receiving audio information via a network from a user of the system at a command center or another node of the system. In another embodiment, a node may include an image capturing device (e.g., a camera and/or video camera (digital and/or analog)) for capturing images and transmitting the image to a graphical user interface of the system.

In one implementation of the system, an obj ect in the area may be provided with at least a pair of associated nodes. In such an implementation, the monitoring of the associated pair of nodes may help permit collection of directional information about movement of the object. This direction information may then be utilized to generate a map of the area proximal to the object as the object moves through the area.

### MONITORING SYSTEM

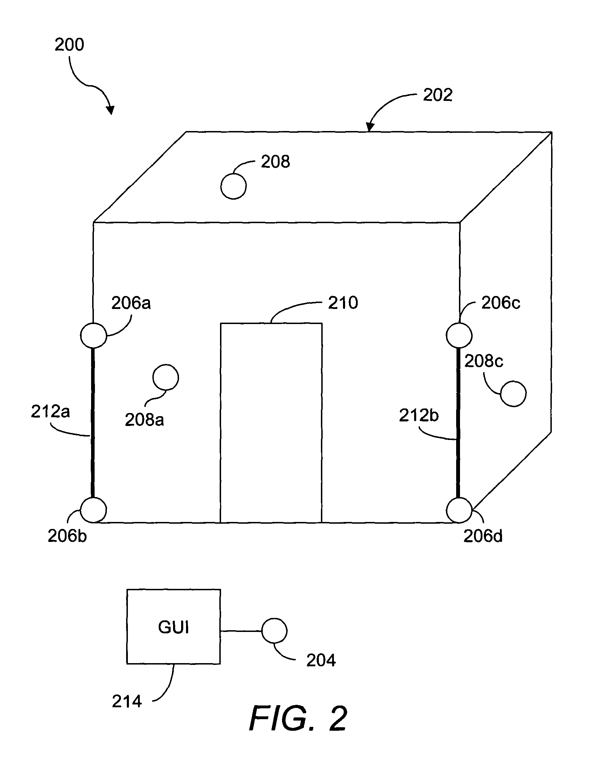

In view of the process 100 set forth in Figure 1, further details of an exemplary monitoring system will now be described. Figure 2 is a schematic block diagram of an exemplary monitoring system 200 for monitoring an area 202 in accordance with an illustrative embodiment of the present invention. The monitoring system 200 comprises a plurality of nodes including at least one operator node 204 (as referred to as the "operator," "operator's node," "user" or "user's node"), a plurality of reference nodes 206a-d, and one or more monitored nodes 208a-c (also referred to as simply as "nodes").

The monitored area 202 (also referred to as a "scene") may comprise, for example, a structure (e.g., a building), and/or a location (e.g., a portion of a structure, a parking lot, storage yard, and/or a fenced-in or gated area). The monitored area 202 may have one or more features or attributes such as, for example, a width, a height, a depth, and/or one or more openings and/or substructures (which may collectively be referred to as "artifacts") such as for example, doors (e.g., door 210), windows, conduits, ducts, walls, floors, levels, stairs, trees, and/or obstacles.

The operator node 204 may be located remotely from the monitoring area 202. Alternatively, the operator node 204 may be located proximal to the monitored area 202 and even inside the monitored area 202. The reference nodes 206a-d and monitored nodes 208a-c may be deployed so that they are located inside the monitored area 202.

The reference nodes 206a-d may be grouped into associated pairs of reference nodes (e.g., reference node pair 206a, 206b and reference node pair 206c, 206d). Each pair of reference nodes may be coupled to an associated mounting element 212a, 212b (e.g., reference nodes 206a and 206b are coupled to mounting element 212a and reference nodes 206c and 206d are coupled to mounting element 212b). As shown in the exemplary implementation of Figure 2, each mounting element 212a, 212b may comprise an elongated rod (also referred to as a "mounting rod") with its associated reference nodes coupled to opposite ends of the rod so that the associated reference nodes (e.g., reference nodes 204a and 206b for mounting element 212a) are maintained in a spaced apart relationship with each other.

The mounting elements 212a, 212b may be mounted to a structure or sub-structure of the monitored area 202. In one embodiment, the mounting elements may include devices for attaching them to structures such, as for example, suction cups or adhesive pads. As an option, a mounting element 212a, 212b may include a stand for supporting the mounting element above a surface (e.g., in an upright or vertical position) without necessarily having to couple the mounting element to a structure or substructure in the monitored area 202. Such an embodiment may help to enhance the overall portability of the monitoring system 200 so that it may be more easily set up and/or relocated to another monitored area 202.

The mounting elements 212a, 212b are adapted for facilitating the positioning of the reference nodes pairs in the monitored area 202. For example, as shown in the exemplary embodiment of Figure 2, the mounting rods 212a, 212b may be positioned adjacent at front left and right corners of the monitored area 202 so that they (and their associated reference node pairs 206a-d) are in a spaced apart from each other and in a substantially vertical and/or parallel alignment with one another. Together, the reference nodes 206a-d may define a reference plane in which all of the reference nodes 206a-d lie. Alternatively, as long as the reference nodes can be "mapped" to known structures or sub-structures of the scene/building, there is no requirement that the reference nodes must be horizontally or vertically aligned.

A graphical user interface (GUI) 214 may be provided on a display at or coupled to the operator node 204 for presenting visual information to an operator (i.e., a user) at the operator node 204 and for permitting the inputting of data and commands into the monitoring system by the operator. Embodiments of the monitoring system may also provide graphical user interfaces at one or more of the other nodes (e.g., using laptops or PDAs) of the monitoring system 200 having either the same or different functions and features as the GUI 214 of the operator node 204.

In accordance with one embodiment, a monitoring system may be set up by identifying nodes, and by identifying and associating capabilities of the nodes (and sensors associated with the nodes). A map or graphical representation of a scene such as a building or a location may then be loaded and the position of reference nodes in the scene may be then be located and aligned so that the map accurately reflects the locations of the reference nodes in the scene and the map is scaled properly with respect to the actual location based on the location of the reference nodes.

With respect to node identification, nodes may initially be anonymous at start up, that is, initially, the nodes may be assigned generic identifiers such as, for example, node 1, node 2, etc. In one implementation, reference nodes may also be provided with default identifiers. Via the graphical user interface, a user may be able to assign new identifiers (or "names") to each of the nodes. For example, via the graphical user interface, a user may be able to label each node with an identifier such as the name of a person (e.g., "John") or the name/description of the object to which the node is associated (e.g., "fork-lift truck," "IV pump," "unit leader"). Via the graphical user interface, groups or associated sets may be created and assigned corresponding group identifiers as well as being populated with nodes (i.e., nodes may be assigned or removed from a group). Via the graphical user interface, a user may specify data associated with a node, upload/download data to and from a node and display capabilities (if any) of a node. In one implementation, the graphical user interface may also afford an ability to perform initialization (i.e., activation) of sensors associated with a node. The identification of some or all of the nodes can be done "off-line" ahead of time and stored as part of the system's database so as to be ready for later deployment. Additionally, some or all of the node information may be entered, updated or corrected "on-sight" during deployment at a scene.

After the nodes have been assigned identifiers/names and attributes, a map of the area to be monitored (or "scene") may be loaded. A first operation may be to have the structure or building displayed in 3D at the operator node. In an ad-hoc scenario, the map data may be generated dynamically using information acquired from the nodes at the scene/building. Artifacts such as number of floors and the location of doors/windows may then be stored in the monitoring system.

After the map of the scene has been loaded, a position of the reference nodes to the building/structure/area (i.e., the scene) may then be specified. In one embodiment, reference nodes may be physically located in a scene by positioning two vertical rods (each having two reference nodes - one reference node at the top and bottom of each rod) at the front-left corner and front right corner of the structure/area to create a rectangle of four nodes in the vertical plane. In the graphical user interface, the two reference rods representations may be dragged and dropped to the required position on the structure map that corresponds to their position at the scene (either actual or estimated position).

Once the reference nodes are positioned, alignment of the reference nodes with respect to the map of the scene may be performed. The reference nodes may determine the range between each other to establish their exact position relative to each other. This may be accomplished via wireless communications between the nodes using their transceivers. This information may then be transmitted to the command node where the reported range data may be used to scale the size of the map and adjust the location of the reference nodes. Once the reference nodes are located accurately on the map, the location of all active nodes may be calculated via wireless communication between each node and the reference nodes. In one embodiment, the operator may act as a fully functional location aware node. The four reference nodes may range on the operator so that the location of the operator is calculated and plotted on the map of the scene as well.

Once the locations of the active nodes is determined and plotted on the map of the scene, the position of nodes (e.g., mobile nodes) may be tracked with reference to the map of the structure and data from the nodes may be displayed in summary form or in more detail in the graphical user interface.

### Monitoring Engine

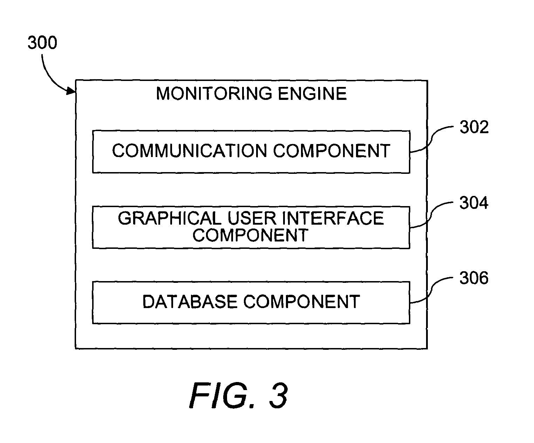

The system may include an monitoring engine for executing operations of the various embodiments of the monitoring system. The monitoring engine may be located at a node, a reference node or may reside on a computer in communication with the reference nodes and/or nodes via a communication link such as a wireless communication link and/or even a network such as a local area network (LAN) or the Internet. Components of the monitoring engine may even be distributed over several computers/nodes. Figure 3 is a schematic block diagram of an illustrative monitoring engine 300 in accordance with an exemplary embodiment. As depicted in Figure 3, the engine 300 may include a communication component 302 for communicating with the various nodes of the monitoring system (e.g., reference nodes, nodes inside the monitored area, and/or nodes outside of the monitored area) and for receiving information about locations of the nodes in the monitored area. The engine may also include graphical user interface component 304 having logic for presenting a graphical user interface capable of displaying a graphical representation of the area as well as logic for positioning graphical representations of the reference nodes in the graphical representation of the area at locations corresponding to the locations of the reference nodes in the area utilizing the information about the locations of the reference nodes. The graphical user interface component 304 may also include logic for displaying a graphical representation of the node in the graphical representation of the area at a location corresponding to the location of the node based on the monitoring. The engine 300 may also include a database component 306 for storing and retrieving information collected and generated by the engine from a database coupled to the engine.

### Nodes

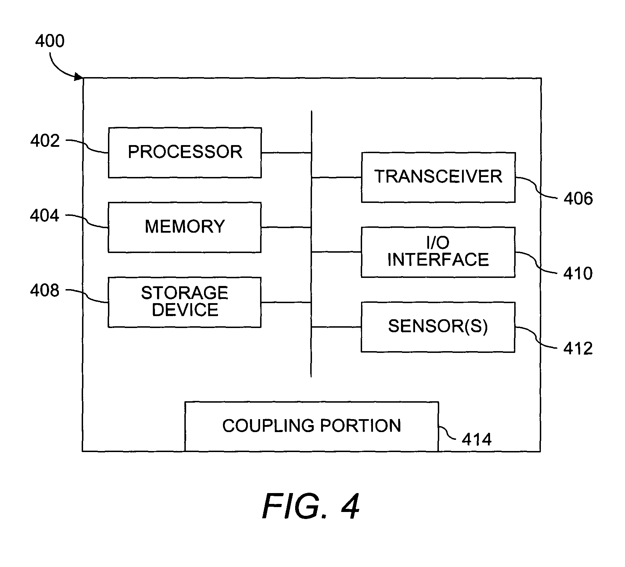

Figure 4 is a schematic block diagram of an illustrative node 400 for use in an monitoring system 200 in accordance with an exemplary embodiment. Each node 400 may comprise a computer (e.g., a operator node) and/or an application-specific integrated circuit (ASIC) (e.g., a reference node and/or monitored node) and may include a processor 402 (e.g., a central processing unit or "CPU") and memory 404 (e.g., ROM and/or RAM) and a transceiver 406 for permitting wireless communication with one or more of the other nodes and devices of the monitoring system 200. Each node may also include additional logic and circuitry for affording storage capability (i.e., storage device 408 - (e.g., a hard disk drive, an optical media drive, a flash memory)), as well as I/O capability (i.e., I/O interface 410) and/or sensor capability (i.e., sensor 412) so that I/O devices and/or various sensors may be included in and/or coupled to a node.

Some nodes may be constructed so that they are simply a tag (e.g., a RFID tag) with data and/or I/O capability, while other nodes may be coupled and/or integrated with head-gear with extensive I/O capabilities such as audio transmission (e.g., full duplex voice communication), video transmission (e.g., video capture at the node and/or video display at the node), text transmission (e.g., display of instruction, messages, commands, warnings), graphics (e.g., display of other node locations, etc.) and global positioning system (GPS) capabilities (especially for reference nodes). Some exemplary I/O devices that may be coupled to a node (depending on the node functionality that is desired) may include, for example, a visual display (e.g., a monitor), user input devices (e.g., a keyboard, a keypad, a touchpad, a touch screen on the display, and/or a pointer device such as mouse or trackball) to permit the inputting of commands, data and/or other information into node, audio devices (e.g., a microphone and/or speakers), one or more video or imaging devices (e.g., a video camera and/or digital image camera), a network interface component (e.g., a LAN card and/or modem), a printer. A node may also include USB, serial, parallel interfaces to which a variety of I/O devices may be coupled to the node. While each node may include some or all of the above-described I/O devices, the I/O devices included in any given node may be implementation-specific and dependant, for example, on the type of node or the tasks that assigned to the node.

Sensor capabilities of a node may be related to the above data capabilities and as a result, may be matched to node data capabilities. For example, a node may include sensors for use in controlling the operation of a camera (including video camera) coupled to a node such as sensors for helping control the frame-rate and resolution of the camera. A node may also include a temperature sensor for sensing ambient temperature. If a node is associated with a human (or animal), the node may include sensors for monitoring biological attributes of the subject such as heart rate, body temperature. Some additional exemplary sensors that may be included in a node may include, for example, a light sensor, a sound sensor, a seismic sensor, a barometer, a motion sensor.

A node may also include a coupling portion 414 capable of attachment to another object. For example, the coupling portion of a reference node 206 may be adapted for coupling to the end of a mounting rod 212 while the coupling portion of the monitored node 208 may be adapted for attachment to a person or the person's clothing or to a surface of an object that is to be monitored by the monitoring system 200.

In one embodiment, a graphic user interface (GUI) may be provided (for example, the GUI at the operator 204 or operator's node) for initializing and setting up a node's sensors and may also be used to help control the downloading and uploading of information into a node (including its associated components and sensors). The GUI may also permit the assigning of pre-defined warning thresholds for the various sensors. For example, the GUI may be utilized to set a maximum and/or minimum temperature threshold for a temperature sensor so that the sensor can be used to alert the system (and users thereof) when a given node is in an area that is either too hot or too cold.

### GRAPHICAL USER INTERFACE

As previously described, a graphical user interface (GUI) may be provided on a display at or coupled to an operator node of the monitoring system for presenting visual information to an operator (i.e., a user) and for permitting the inputting of data and commands into the monitoring system by the operator. The graphical user interface of the monitoring system may represent building(s) or scene, the objects or nodes and their associated paths or trails in an interactive three dimensional (3D) graphical environment. This allows an operator to visualize and interpret the large amounts of information generate when tracking many objects and an unfamiliar building. The graphical user interface may also present information, about the building and objects with intuitive text displays organized into familiar tree views and lists. The 3D graphical views, tree lists and toolbars may be customizable and can be positioned and sized to fit the requirements of the operator.

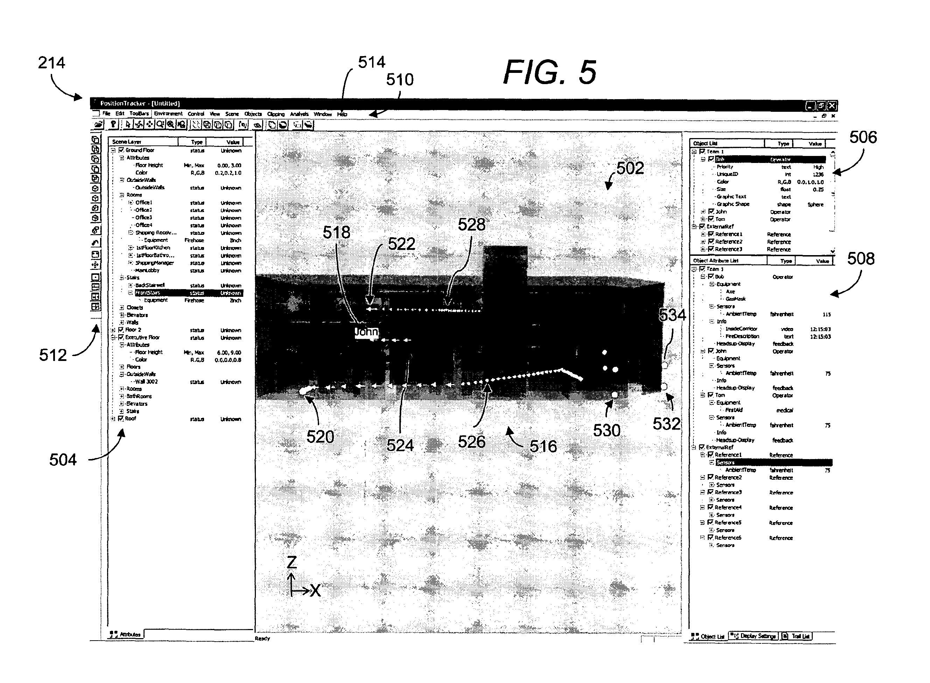

Figures 5-8 are schematic representations of various illustrative aspects of an exemplary graphical user interface (GUI) 214 of a monitoring system 200 that may be presented on a display of a command center node 204. As shown in Figures 5-8, the GUI may have a plurality of display areas for presenting a plurality of user interface elements to a user of the monitoring system (e.g., an operator at the command center). The display areas/user interface elements presented via the GUI may include: a plurality of windows in which a map display area 502 and one or more lists or hierarchical trees are presented; one or more toolbars; and/or one or more dialog or command windows. More particularly, embodiments of the GUI may include one or more of the following trees or lists: a building/scene tree 504; an object list 506; an object attribute tree 508, an object trail list; and/or a distance list. Embodiments of the GUI may also include one or more of the following toolbars: a menu bar 510; a project toolbar, a view toolbar 512, a scene toolbar, a clipping toolbar, control toolbar; and/or an analysis toolbar. Embodiments of the GUI may further include one or more of the following windows or dialogs: an object alignment dialog; a historical review window; and/or a network window. Embodiments of the GUI may also include user interface elements for multi-language support, a help system (accessible via a help menu 514) and/or one key access context help (these and other user elements are described in further detail later).

The display areas may be presented in a single window or in discrete windows for each display area (or some combination thereof, e.g., a plurality of discrete windows in a single common window as presented in the exemplary implementations shown in Figures 5-8). The graphical user interface may also include features for permitting the repositioning of windows in the graphical user interface. In addition, each window (including display area windows) may be scrollable and resizable to permit viewing of an area that is larger than can be presented in the viewable area of a window. For example, each window may present user selectable commands for scrolling and resizing of the window such as scroll bars for horizontal and/or vertical scrolling and resizing command buttons and/or adjustable window frames. The GUI may also present a movable pointer that may be moved about the GUI and over the various user interface elements to permit the selecting of windows, display areas, elements and/or commands, etc. that may be presented in the GUI. The selection of an element or window may activate that element or window so that commands may be issued to the active element(s) or window. In one embodiment, an element or window may remain active after its selection until it is selected again via the pointer, at which point the active element becomes inactive or unselected. Through such a protocol, it is possible that one or more elements in a given window or windows may be active at any given time to permit the simultaneous issuing of a common command(s) to all of active elements. Via the pointer, selected elements may be activated or deactivated and commands may be issued. For example, the pointer may be used to activate a window or element in a window so that commands are issued to the window or elements. In one embodiment, the pointer may be under the control of a user via a user input device (e.g., a mouse and/or keyboard) of the operator node (or coupled thereto) to permit the user to issue commands and select items displayed in the GUI.

With reference to Figures 5-8, Figure 5 is a schematic representation of an illustrative embodiment of a graphical user interface 214 of a monitoring system with a map display area 502 presenting a side view 516 of a three story building in a semi-transparent mode with a plurality of objects (i.e., monitored nodes) 518, 520, 522 and their associated trails 524, 526, 528, and a plurality of reference nodes 530, 532, 534. Figure 5 also shows illustrative embodiments of a scene tree (also referred to as a "scene layer list'') 504, an object tree (also referred to as an "object list'') 506 and an object attribute tree (also referred to as an "object attribute list'') 508.

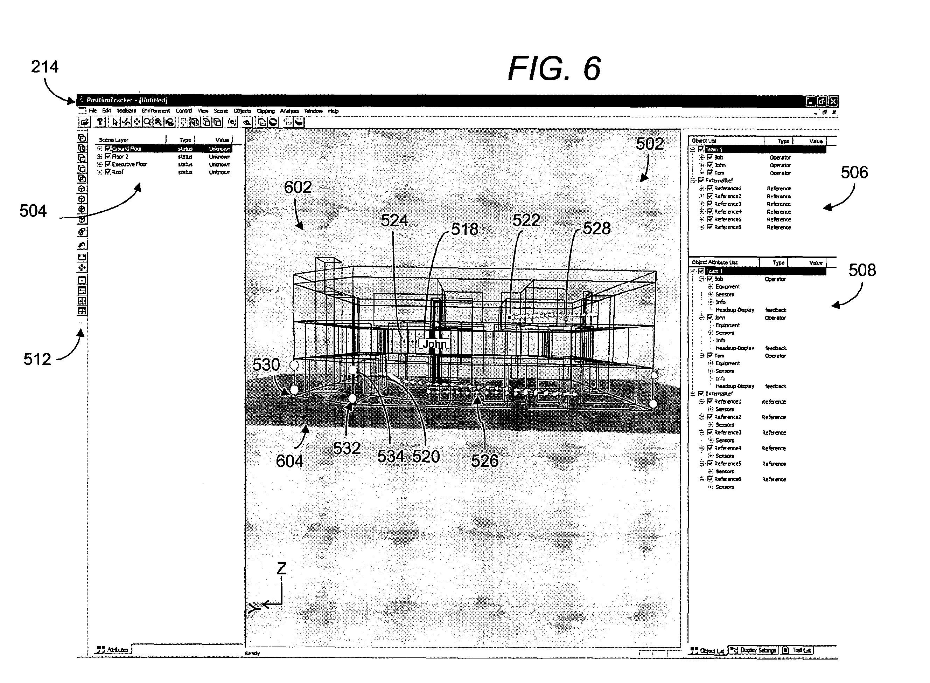

Figure 6 is a schematic representation of an illustrative embodiment of a graphical user interface 214 of a monitoring system with a map display area 502 presenting a front view 602 of a three story building in a wire-frame mode with a plurality of objects (i.e., monitored nodes) 518, 520, 522 and their associated trails 524, 526, 528, and a plurality of reference nodes 530, 532, 534. Figure 6 also shows illustrative embodiments of a scene layer tree 504, an object tree 506 and an object attribute tree 508 with their data trees presented therein expanded differently than in Figure 5.

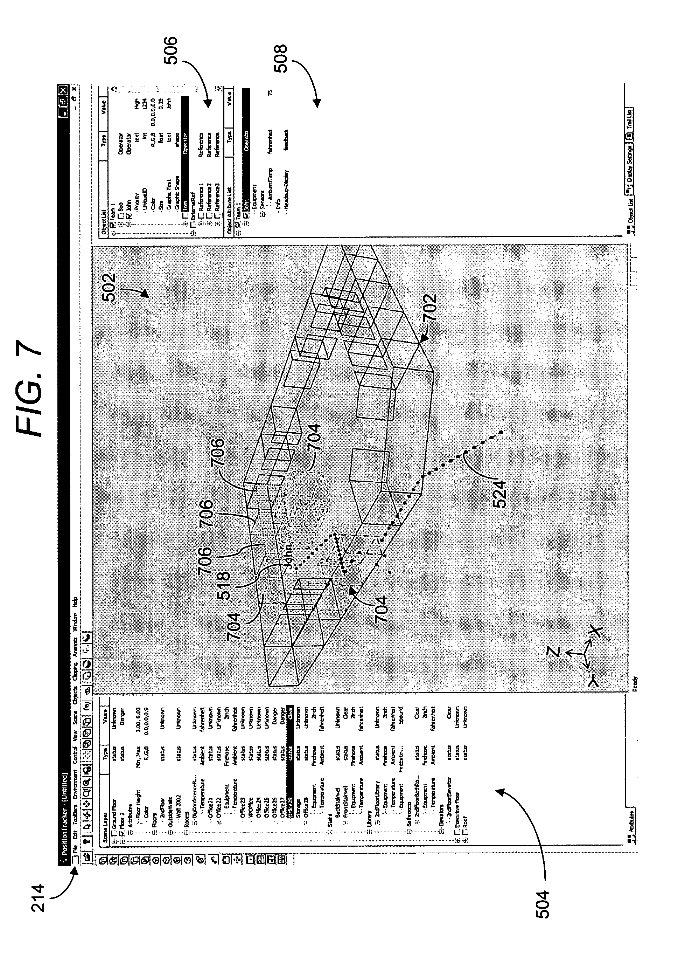

Figure 7 is a schematic representation of an illustrative embodiment of a graphical user interface of a monitoring system 214 with a map display area 502 presenting a perspective view 702 of one of the floors of the three story building shown in Figures 5 and 6 (in particular, the second floor) in a wire-frame mode with all but one of the objects (i.e., node 518) and all of the reference nodes hidden. Figure 7 also shows several of the rooms of the floor shaded (or colored) to represent their current status with some of the rooms presented in a first shading 704 to represent a first status (e.g., a clear status) and other rooms presented in a second shading 706 to represent a second status (e.g., a dangerous status).

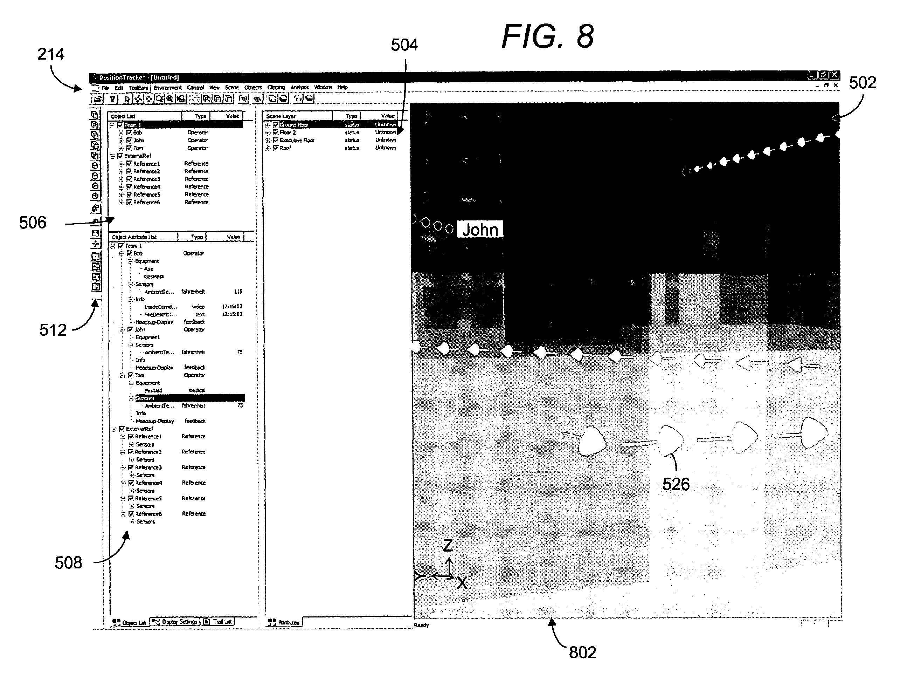

Figure 8 is a schematic representation of an illustrative embodiment of a graphical user interface 214 of a monitoring system with a map display area 502 presenting a perspective view 802 of the building in a semi-transparent mode that has been zoomed in to provide a closer view of the trail 526 of one of the objects 520. Figure 8 also shows the object tree 506 and the object attribute tree 508 located to the left of the scene tree 504 to illustrate a display area repositioning feature of the graphical user interface that permits repositioning of windows in the graphical user interface 214.

In accordance with Figures 5-8, further details of various display areas and user interface elements of the graphical user interface 214 of the monitoring system 200 will be described.

### Map Display Area/ Scene and Object (3D Graphical) View 502

The scene and object graphical view (also referred to as the "scene and object 3D graphical view" and the "map display area") 502 may be presented in a window/display area of the graphical user interface 214 and may display a three dimensional (3D) graphical representation of the scene (e.g., a building) and, as a further option, a ground plane (see e.g., ground plane 604 in Figure 6). The scene and object view 502 may also display 3D graphical representations of the objects (e.g., nodes 518, 520 and 522 in Figure 5) in the scene and their associated trails (e.g., trails 524, 526 and 528). The object trails detail the location of the object through time (i.e., the path taken by the object over time) and may be represented with arrows to indicate the direction ofmovement over time. The object and trail shapes, text, color, transparency and duration may be fully customizable to suit the needs of a given application and/or user. The scene and/or objects may each be independently represented as solid objects (i.e., solid mode), as wire-frame objects (i.e., a wire-frame mode), and as semi-transparent objects (i.e., a semi-transparent mode). Textual notes, sensor values, images, video, audio or other data and/or a graphical representation of the information may be displayed along with the historical trail to visually indicate the time and location associated with the information.

### Position Tracking Via the Scene and Object View 502

Via the scene and object graphical view 502, position tracking features of the monitoring system may be implemented. For example, the text, color, symbol and/or size of an element of the scene or an object may be used to identify different objects and object types (e.g., reference nodes, sensors, human, equipment, etc). An active object or group of object may be highlighted with color, symbols and/or size. Objects and/or groups of objects may be hidden or made semi-transparent in order to concentrate the display on other objects or groups as shown in Figure 7. Color, size, text and sound can be used to indicate alerts or alarms when an object is idle or missing longer than a minimum assigned period (e.g., suggesting that a person is hurt if stationary for longer than the assigned period) or when a object that shouldn't move, moves (e.g., a piece of expensive equipment moving through the scene suggesting that it is being stolen). Alarms may also automatically be signaled when objects move in to or out of regions of the scene with predefined properties (e.g., a person enters a room marked as dangerous, or a piece of equipment is no longer in the lab).

### Scrollable Tree/Lists

Scrollable trees/lists views or windows presented in the graphical user interface of the monitoring system allow hierarchies of object or structures to be displayed in a manner so that "clicking" or selecting the desired level exposes deeper levels of hierarchal information. If the information expands beyond the view display area, horizontal and/or vertical scroll bars appear to allow access to hidden information. As earlier described, embodiments of the graphical user interface may include one or more of the following scrollable trees or lists: a building/scene tree 504; an object list 506; an object attribute tree 508, an object trail list; and/or a distance list. Further details of these and other tree lists that may be provided in the graphical user interface of the monitoring system will now be described.

### Scene/Building Tree

Structures (building, floors, rooms, stairwells, etc) in the scene/building may need to be assigned properties that identify characteristics particular to the respective structures. These properties can include, but are not limited to, descriptive information, equipment, alarm/alert status, importance/ priority, and danger/safety status. Sensors, microphones and cameras in or nearby the structures may assign the structure properties. The structure properties may be assigned by objects in the field and/or control operators using sensors, microphones, cameras, keyboard, touch pad, drag-and-drop mouse operation, pull-down combo list box or other input mechanism. The properties may also be assigned from a database or source file. These structure properties may be stored in a database or target file for later recall and reassignment or analysis. The structure properties may be displayed graphically or in list form. The displayed structure properties may also be highlighted using special symbols, text or audio alerts. Further, structure property characteristics may be displayed using various colors, sizes, and/or transparency levels. The status of groups of sub-structures can be dynamically processed to determine the overall status of a parent structure. For example, when all the rooms in a floor are assigned the property of clear/safe, then the floor can automatically be assigned the status of clear/safe.

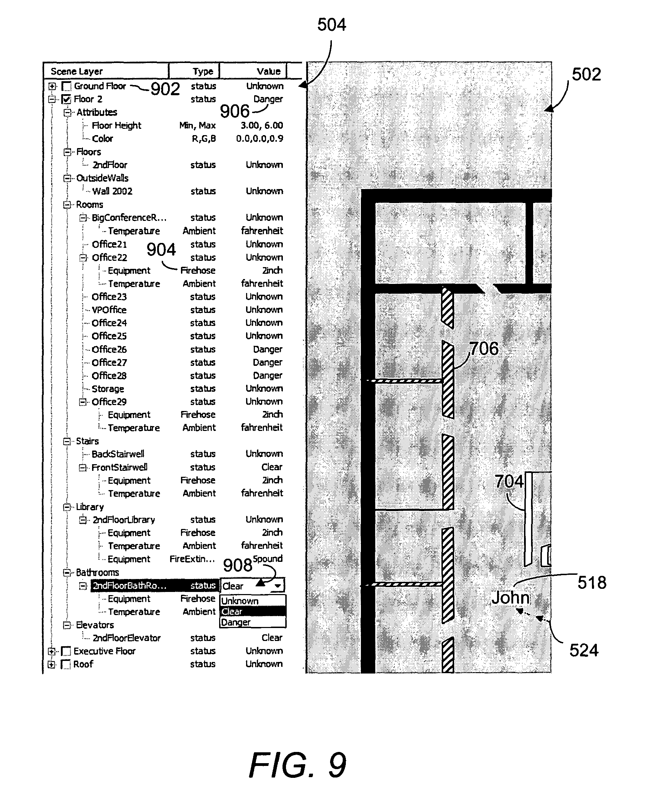

Figure 9 is a schematic diagram illustrating an exemplary scene/building hierarchal tree list 504 of a graphical user interface 214 of a monitoring system 200 in accordance with an illustrative embodiment.

The scene/building tree list view 504 may be used to list structures (e.g., structure 902) in the site/building such as floors, stairwells, elevators, equipment, attributes (e.g., attribute 904 and status (e.g., danger status 906). For example, buildings, floors and sub-structures can be given names and attributes and assigned equipment (such as, e.g., fire extinguishers, axes, first aid and fire hoses). The status of floors and structures may be dynamically updated to reflect unknown, clear or dangerous conditions. The color (or other indicator) of the 3D graphics of the floor and structures may be automatically updated to show the status (e.g., blue = unknown, green = clear, red = dangerous). Attributes, equipment and sensor information may be quickly and seamlessly be assigned to floors and structures and moved between structures with pop-up menus and drag/drop functionalities (see drop down menu 908).

The scene tree 504 may also provide the following functionality: (1) facilitating the dynamic adjusting of incomplete/inaccurate 3D models; (2) combining 2D drawings into 3D models; (3) a camera with two transceivers may be used to get direction and orientation to aid in mapping images onto 3D building model; and (4) a range finder may be attached to transceiver for use in assist in mapping and with identifying object locations.

Buildings may be layered by floors. Floors/levels may be automatically generated based the height of the objects. An operator can 'tune' the position of the floors. Actual pictures, images or 2D CAD drawings of floor plans may also be layered into the 3D model and placed on the floor to further aid the operator with the building layout. Floor and Sub-structure status can be identified and monitored via the scene/building tree 504.

### Object Tree

Objects/nodes may need to be assigned properties that identify characteristics particular to the respective objects/nodes. These properties may include, but are not limited to, descriptive information, equipment, capabilities, alarm / alert status, health / injury status, military or civilian rank. These properties may be assigned by the object/node themselves via sensors, microphones, cameras, keyboard, touch pad, drag-and-drop mouse operation, pull-down combo list box or other input mechanism provided at the node. Object/Node properties may also be assigned by other objects/nodes or control operators using similar input devices. The object/node properties may also be assigned from a database or source file. The object/node properties may be stored in a database or target file for later recall and reassignment or analysis. The object/node properties can be displayed via the graphical user interface 214 graphically and/or in list form and may be highlighted using special symbols, text or audio alerts. Further, object/node property characteristics may be displayed using various colors, sizes, and/or transparency levels.

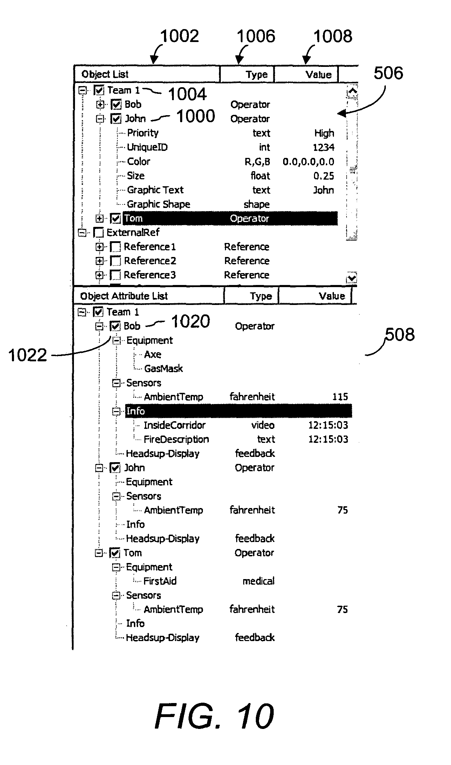

Figure 10 is a schematic diagram illustrating an exemplary object hierarchal tree list 506 and an exemplary object attribute hierarchal tree list 508 of a graphical user interface of a monitoring system in accordance with an illustrative embodiment. The object list 506 may contain a list of all the objects, nodes and reference nodes in the scene (e.g., object 1000 "John"). As shown in Figure 10, the list of objects/nodes may be presented in a object column 1002. The objects and nodes may be organized into groups (e.g., Team 1 1004) to facilitate multiple object operations. Transceiver unique identifiers may be associated with objects and nodes. Objects may also be associated with categories, attributes, data (e.g., text, audio, video), sensors, equipment and feedback from other objects via the object list 506. In this capacity, the object list 506 may also include editable identification and display information related to the objects. As shown in Figure 10, this information about an object/node may be presented under the Object column 1002 and/or additional columns such as a Type column 1006 and a Value column 1008. Display characteristics of the objects including, for example, shape, text, color, size, transparency and duration may also be defined via the object list.

### Position Tracking Via the Object Tree

The text, color, symbol and/or size can be used to identify different objects and object types (reference nodes, sensors, human, equipment, ...). An active object or group of objects can be highlighted with color, symbols and/or size. Objects or groups of objects can be hidden or made semi-transparent in order to concentrate the display on other objects or groups. Color, size, text and sound can be used to indicate alerts or alarms when an object is idle or missing longer than a minimum assigned period (a person is hurt) or when a object that shouldn't move, moves (such as a piece of expensive equipment). Alarms can also automatically be signaled when objects move in to or out of regions with predefined properties (a person enters a room marked as dangerous, or a piece of equipment is no longer in the lab).

### Object Attribute Tree

With reference to Figure 10, an exemplary object attribute hierarchal tree list 508 of a graphical user interface 214 of a monitoring system 200 is shown. The object attribute tree 508 may present objects/nodes with their associated attributes and related information (e.g. node "Bob" 1020 and associated attributes "Equipment," "Sensors," "Info," and "Headsup-Display"). The object attribute tree 508 may be used to show only those objects that the operator is actively (i.e., presently) interested in, for example, by selecting objects via the hierarchal tree and checkmark boxes 1022. Attributes, equipment, sensor information may be quickly and seamlessly be assigned to objects and moved between objects using pop-up menus and drag/drop functionality of the object attribute tree 508. In the object attribute tree 508, dynamic information related to the objects may be assigned sub-categories. The object attribute tree 508 may also support assigning information and sensor data as dynamic real-time feedback to the person in the field through a heads-up display or PDA carried or worn by the person in the field.

### Data Tracking Via the Object Attribute Tree

Data may be collected from the transceivers of a node regarding the ambient temperature, smoke levels, text, images, audio, video, motion detection, contact closure, pressure and so on. The data and/or the presence of the data may be transmitted to the operator node where it may be displayed in the objection attribute tree 508 as text, symbols/icons or with various colors and sizes. The object view 506 may also be used to selectively enable/disable the display of data elements in the object attribute tree 508. The graphical user interface 214 may also be capable of managing situations where an object disappears due to damage or signal loss, possibly based on operator assigned timeouts or a timer signal from the transceiver.

### Accessing Object Attributes Via the Object Attribute Tree

Information relating to object attributes may also be accessed and edited via the object attribute tree 508. For example, text notes may be inserted in time/space to explain or outline the path of an object or an event that occurred related to an object at a particular location and time via the object attribute tree 508. Equipment and resources may be associated with an object and may identified graphically with symbols, icons, colors and/or text. Objects such as civilians and injured rescuers can even be specified and identified graphically.

### Object Trail List

Via the graphical user interface 214, object historical locations/paths (i.e., historical trails or trails) may be displayed graphically and in a scrollable tree list. Trails may be used as an aid in establishing escape routes or helping field personnel backtrack their paths. Display characteristics (e.g., shape, text, color, size, transparency and duration) associated with each trail may also be user defined. A user may also be permitted to assign start and end values to trails to allow trails to fade in size, color and/or transparency.

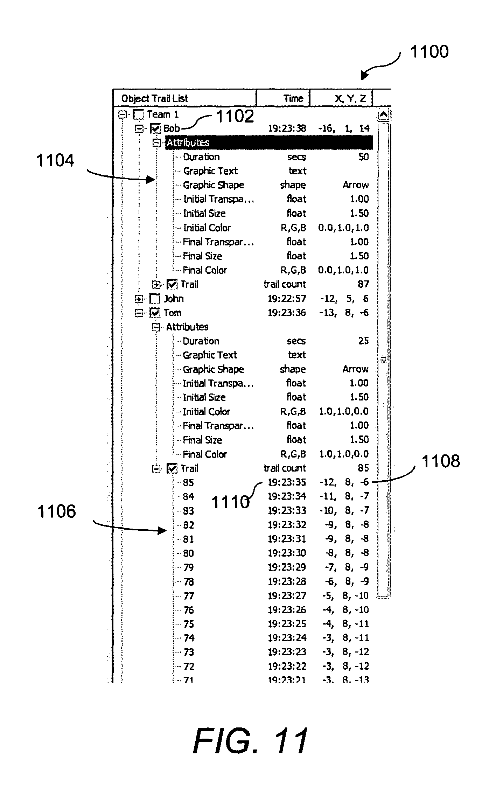

The graphical user interface 214 may also display an object trail list 1100. Figure 11 is a schematic diagram illustrating an exemplary object trail hierarchal tree list 1100 (also referred as a historical trail hierarchal list) of a graphical user interface 214 of a monitoring system 200 in accordance with an illustrative embodiment.

The graphical user interface 214 may display an object trail list 1100 that contains textual information regarding a node/object's location and trail (i.e., the path the object has taken over a past period of time). More particularly, the object trail list 1100 may present a list of all the objects (e.g., the object named "Bob" 1102) with attribute information 1104 (i.e., properties) about display characteristics of their respective trails (i.e., characteristics of the trail presented in the scene and object graphical view 502), a list 1106 of 3D locations (e.g., X,Y,Z coordinates 1108) and time (e.g., time entry 1110) of the historical trail locations, as well a list of additional data associated with the trail locations (e.g., text notes, images, audio / video clips, ...). The information displayed about the trails in the object trail list 1100 may be editable. Via the object trail list, an operator can assign the properties of a given trail for an object, for a group of objects and even for all objects. Selection of an item or group of items in the list can highlight the visible item(s) in the map display area or position/scale the 3D scene/building in the map display area 502 such that the selected items are all visible and highlighted.

### Trail / Path Creation

Via the object trail list 1100, trails for an object, a group of objects or all objects may be assigned variable lengths/duration such as, for example: 10 seconds, 30 seconds, 1 minute, 10 minutes, infinite or a custom length. The trail/path may be displayed by a continuous line with built in arrows that indicate the direction of movement over time of the trail. Alternatively, the trail may also be displayed with discreet repeated symbols, such as repeating arrows or text that indicate the direction of movement over time of the trail. In such an implementation, the distance or period between each symbol may be adjusted, as well as the size, transparency and color. The display attributes of size, transparency and color of a trail may also be assigned a final or ending value that is different from an initial or starting value in order to indicate aging of trail (i.e., to help cause the trail to fade into the distance after some period of time). A special symbol or color may be assigned to indicate the segment of a trail or path where the object's transceiver was inaccessible. A special indicator (e.g., symbol, text or color) may be displayed (either in the scene and object graphical view 502 or in the object trail list 1100) to indicate the location (and relative time) on a trail or path where there was additional info (image, text, audio clip, alarm, video...) associated with the location and time. Additionally, the distance between symbols along the path, the size of the symbols and/or the color of the symbols may visually represent information such as speed of movement, heart rate, and/or ambient temperature.

### Object Alignment Dialog

During deployment of the monitoring system, information transmitted by the transceivers of the reference nodes deployed in the scene/building may be used for aligning the positions of object representations with the model of the scene/building displayed in the graphical user interface. If the reference nodes include GPS functionality, the reference nodes may be able to automatically align themselves with each other. However, even with GPS, the alignment of the reference frame for the object/node 3D coordinate system and the coordinate system of the 3D structure/building model(s) may need to be adjusted. Such adjustments may be necessary due to errors in placement of the reference nodes or inconsistencies between the 'actual' or 'real' scene /building and the 3D graphical representation of the scene/building (i.e., the scene model). In order to provide a means for performing this alignment or tuning process, the graphical user interface may include an object alignment dialog.

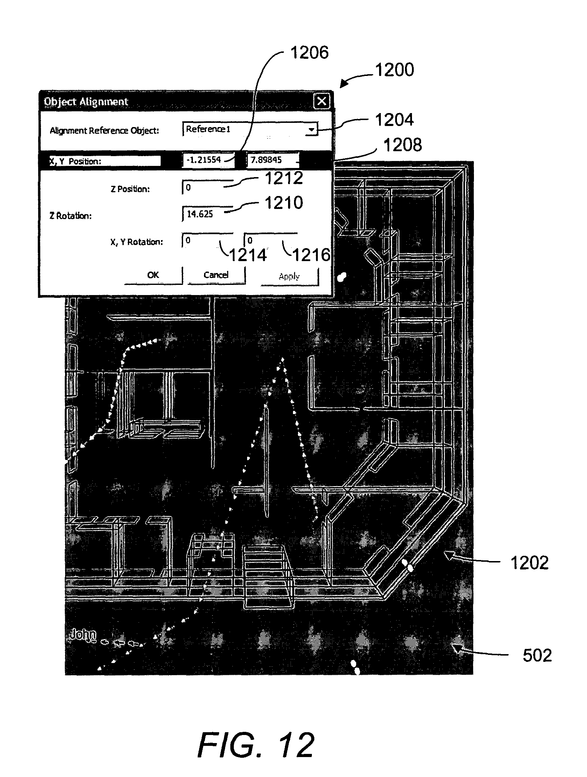

Figure 12 is a schematic diagram illustrating an exemplary object alignment dialog 1200. or menu of a graphical user interface of a monitoring system. As illustrated in Figure 12, the object alignment dialog 1200 may be displayed over a portion of the scene and object graphical view 502 (which in the present figure is displaying a top view 1202 of the building in a wire-structure mode). Via the object alignment dialog, a user may be afforded a means for adjusting and tuning of the alignment of the objects with the scene. More specifically, the object alignment dialog 1202 may allow an operator to graphically align the reference nodes with the model of the scene/building.

Via an alignment reference object pull down menu 1204, an alignment reference object may be selected. Alternatively, an alignment reference object may be selected from the map display area 502, object list 506 or object attribute tree 508. The X, Y position of the alignment reference object may be moved relative to the X, Y plane of the scene or building by inputting values in the X and Y fields 1206, 1208 or by moving the position of the scene or building relative to the selected alignment reference object directly on the map display area 502 using a input device such as a mouse or keyboard. A Z rotation of the selected alignment reference object may also be adjusted relative to the scene or building via a Z rotation field 1210 or by rotating the orientation of the scene or building relative to the selected alignment reference object directly on the map display area 502 using a input device such as a mouse or keyboard. The Z position (height) of the selected alignment reference object may also be adjusted relative to the scene via a Z position field 1212 or directly on the map display area 502. X and Y rotation fields 1214, 1216 may also be provided to permit adjustment relative to the scene of the X, Y rotation of the alignment reference object.

### Toolbars and Menus

Embodiments of the graphical user interface 214 may include one or more of the following toolbars, windows and menus.

### Project Toolbar

The graphical user interface may include a Project Toolbar that may be used to create new scenes, load or save building and object files and for quick access to help. Various 3D CAD drawing and model formats can be imported or possibly exported include: DWF, DWG, DXF, DXG, WRL (VRML), VDA, SAT (ASIC), IGS (IGES), STP (STEP), X_T, X_B, ASM, DRW, LFP. The monitoring system may also import 2D CAD drawing formats and layered them onto the floors of a dynamically constructed 3D building. The 2D CAD drawings can also be used as guides for constructing a 3D model. Various image formats may be imported (such as TIF (TIFF), BMP, JPG (JPEG)) and layered on floors or structures, such as walls. If images are of building drawings or plans, they can be layered into floors. The images can be used as guides for constructing 3D models.

### View Toolbar

The graphical user interface of the monitoring system may include a view toolbar that has tools to adjust the direction of the graphic view, snap-to-fit and multi-view settings. The view can also be set to dynamically follow an object. The view toolbar may include view setting that permit a user to adjust the 3D graphical scene and object view 502 to hide the scene or building model(s) or represent them as wire-frame, semi-transparent, solid or textured with actual pictures or representations. The scene and buildings may be viewed from various standard 'views': front, top, left, right, back, orthogonal left-front, orthogonal right-front, orthogonal left-back and orthogonal right-back. The operator can dynamically rotate, zoom in/out and position the building / scene relative to viewing the area. There may be a snap-to-view feature that resizes and positions the view to include selected objects and/or structures of the building/scene. The operator can also dynamically save and reference custom views.

In one embodiment, the image displayed in the graphical scene and object view 502 can be locked to an object and follow the object dynamically as it (human, animal or robot) moves through the building to provide a first person camera view. The distance and angle of the first person view can be adjusted relative to the target object. This allows the operator to see the scene from the perspective of the object. In another embodiment, the graphical user interface may display multiple simultaneous views of the 3D graphical scene and object view 502. This allows the operator to see the scene from various orientations to aid in understanding the 3D relationship of the scene and objects. The separate views can be 'locked' together to allow a single rotation of zoom to affect multiple views.

### Scene Toolbar

The graphical user interface 214 may include a scene toolbar that allows the building and scene models display characteristics to be dynamically changed. The scene may be shown as wire-frame, semi-transparent, solid or hidden. The ground plane can be shown or hidden. The scene toolbar also may allow access to the object alignment dialog 1200.

### Clipping Toolbar

The graphical user interface 214 may include a clipping toolbar allows the scene and object information to be independently removed by floor or an adjustable clipping plane.

### Control Toolbar

The graphical user interface 214 may include a control toolbar determines the control characteristics of the mouse and keyboard. The mouse can be set for selection, rotation, translation, scaling, zoom to region or camera position.

### Analysis Toolbar

The graphical user interface 214 may include an analysis toolbar that allows measurement of distance and computation of shorted or safest path by selecting objects, nodes, trail segments, equipment and building / structure locations. The analysis toolbar may also provides easy access to the distance list.

### Distance List

The graphical user interface 214 may include a distance list that contains a list of rulers attached to objects, nodes, trail segments, equipment and/or structure locations for continuous dynamic updating. Various measurement options are available including short path, safest path, known path and direct distance. These values are displayed in the distance list and may also be displayed graphically in the 3D scene and object views 502.

### Historical Review Window

The graphical user interface 214 may include an historical review window that allows review of events. Entire scene, object and operator interactions can be replayed in real-time, slow-motion, fast-forward, reverse, pause or seek to time via the historical review window. The historical review window may be used dynamically by an operator as an aid in establishing escape routes or helping field personnel backtrack their paths. The historical review window can also be used off-line to create simulated training scenarios or for post analysis to assist with training or legal issues.

### Network Window

The graphical user interface 214 may include a network window that allows an operator to link the graphical user interface with a specified database through the local area network or internet. The graphical user interface can also be linked to other user interfaces to allow monitoring of operator actions and views.

### Menu Bar

The graphical user interface 214 may include a menu bar that allows access to all windows, dialogs and toolbars through a standard hierarchical menu system. The menu bar allows user interface elements to be shown/hidden and provides a mechanism for exposing and accessing various functions of the graphical user interface.

### Path Determination

Embodiments of the monitoring system 200 may use the information gathered from the objects (i.e., nodes), operators and database inputs to dynamically analyze the relationships of the objects and structures in the scene. Using this acquired information, the monitoring system may be capable of analyzing the information to generate distance information between elements in a scene as well as routes or paths through a scene. The generated distance information and/or paths may then be presented via a graphical user interface (such as the exemplary graphical user interface 214) to help guide a user in the scene through the scene or to provide a user with additional distance information about elements in the scene. Some exemplary types of paths and distance information that may be generated in implementation of the monitoring system 200 may include, for example: (I) information about a clear or safe path (also referred to as "clear path" or "safe path"); (2) information about a shortest path (also referred to as "shortest path"); (3) information about a direct distance (also referred to as "direct distance"); and (4) distance information about a nearest neighbor (also referred to as "nearest neighbor'').

### Clear Path/Safe Path

Embodiments of the monitoring system may be capable of computing and displaying (graphically and/or via a list in a graphical user interface) a clear or safe path between an object/structure/location/element in a scene and another object/structure/location/element in the scene. For example, the monitoring system may be capable of generating and displaying a clear or safe path from an object named "John" to the exit nearest to John. In one embodiment, the monitoring system may be able to calculate and display (either graphically or in a list via the graphical user interface) alternative clear or safe paths so that a user may select an alternate path if the first displayed path is unsuitable for any given reason. In such an embodiment, it may also be advantageous to present the list of all possible paths between a selected object/structure/location to be sorted based on distance (e.g., shortest to longest) and/or degree of safety (e.g., safest to least safe).

In a situation where a source or target for the path is an object, the clear or safe path feature may be dynamically updated as the given object(s) moves through the scene. A clear or safe path may also be dynamically updated as new status information about safe and unsafe regions in the scene becomes available to the monitoring system (e.g., through sensor readings of nodes in the scene).

An object/structure/location/element in the scene for which a clear/safe path is desired may be selected by a field operative or by an operator at a monitor/control station. In one embodiment, a field operative or operator may be able to select the desired object/structure/location/element from the graphical user interface via the scene and object graphical display or from a scroll list view (e.g., an object list or an object attribute list) using an input device such as a mouse.

### Shortest Path

Embodiments of the monitoring system may be capable of computing and displaying (graphically or with a list) a shortest path (and, optionally, a list of alternate shortest paths) between an object/structure/location/element and another object/structure/location/element. For example, the monitoring system may be capable of computing and display the shortest path from object "John" to the nearest exit in the scene. In an embodiment where alternate shortest paths are presented, the list of shortest paths between the selected objects/structures/locations may be sorted based on distance and/or safety.

The monitoring system may also be capable of assigning a number to the path to represent a level of danger associated with the identified shortest path and presenting that number to a user via the graphical user interface. For instance, a value of "0" may be used indicate a totally clear or safe path while a "60" may be used to indicate that 60% of the computed path is through unsafe or dangerous structures and/or regions.

In the situation where a source and/or target of the path is an object/element in the scene, the monitoring system may dynamically update the computed and displayed shortest path as the object(s)/element(s) moves through the scene. The shortest path may also be dynamically updated by the monitoring system as new status information about structures and potential obstacles become available. Selection of an object/structure/location/element for calculating a shortest path may be selected by field operatives in a scene or by an operator at a monitor/control station and an object/ structure / location may be selected via the scene and object graphical view or a list view of the graphical user interface using a pointing device such as a mouse.

### Direct Distance

The monitoring system may also be capable of computing and displaying (graphically and/or with a list presented) the direct distance between an object/structure/location/element and another object/structure/location (the direct distance has been described as 'as the bird flies'). In the case where a source and/or target for the path is an object and/or an element, the direct distance may be dynamically updated by the monitoring system as the object(s)/element(s) moves. Like the other paths, the object/structure/location for the direct distance feature may be selected by a field operative or by an operator at a monitor/control station. The object/structure/location/element may be selected from a graphical view and/or list view of the graphical user interface using a pointing device such as a mouse.

### Nearest Neighbor

The monitoring system may further be capable of computing and displaying (graphically or with a list in the graphical user interface) a path to a nearest neighbor between an object/structure/location/element and another object/structure/location/element. In addition, the monitoring system may also be capable of computing and displaying the distances to other objects/structures/locations/elements and then ranking the distances based on their proximity to the source object/structure/location/element. It may be advantageous to allow the list of paths between the selected objects/structures/locations to be sorted based on either distance or safety. For example, the monitoring system may be capable of displaying a list of paths from each of a plurality of paramedics to an injured civilian in a scene and then sorting list from the paramedic that is closest to the injured civilian to the paramedic that is furthest away from the injured civilian. The monitoring system may also assign a number to each nearest neighbor path to represent a level of danger associated with the identified nearest neighbor path. For example, a "0" may indicate a totally clear or safe path while a "60" may indicate that 60% of the path is through unsafe structures or regions in the scene. In the case where a source or target for the path is an object/element, the nearest neighbor path may be dynamically updated as each object/element moves. A nearest neighbor path may also be dynamically updated as new status information about structures and potential obstacles become available. The object/structure/location/elements selected for calculating a nearest past may be selected by a field operative and/or by an operator at a monitor/control station. The objects/structures/locations/elements for calculating a nearest neighbor path may be selected from the graphical user interface via the graphical display view and/or list view using a pointing device such as a mouse.

### Guidance

Embodiments of the monitoring system may also be capable of providing guidance to users of the monitoring system via the graphical user interface of the monitoring system. For example, object locations, object historical trails and structure layout may be used to aid a field operative with directions. Operators in the field may carry field units and use the information directly or may be given assistance from an operator using the monitoring system. For example, the monitoring system may provide guidance to help field operatives locate a particular location, other operatives, civilians, or equipment in a scene. As another example, the monitoring system may be utilized to provide guidance for helping field operatives avoid dangerous areas or collisions with other operatives. The monitoring system may provide further guidance for helping field operatives follow previous paths taken by other operatives. For example, this may allow other operatives to take a path that was found to be safe for another operative or facilitate locating the other operatives and/or equipment by following a previous path. The monitoring system may also be used to help a field operative to retrace their path or portion thereof. For example, the monitoring system may provide guidance that allows safe passage or facilitates locating civilians and/or previously dropped equipment.

### Grouping

It may often be advantageous to work with multiple entities simultaneously in the graphical user interface of a monitoring system. Accordingly, the monitoring system may permit grouping of various elements in the scene via the graphical user interface to permit the issuing of commands (as well as providing other information) to a group of elements simultaneously. Via the graphical user interface, objects or nodes may be organized and controlled in logical groups so that a user may issue operations (such as display/hide, enable trail or send a message) to the whole group simultaneously. Structures may also be organized and controlled in logical groups via the graphical user interface. For example, rooms and floors may be organized into departments or sectors or regions so that issue operations (such as display/clip or "mark as clear" commands) may be made to a group of structures simultaneously.

### Alarms

The monitoring system may also be capable of setting alarms and alerts that may visually and/or audibly indicate an event associated with the object/location, motion or occurrence of an event. For instance, an alarm/alert may be set via the monitoring system to alert a user to unexpected motion of an element in a scene. For example, transceivers (i.e., nodes) may be placed on equipment or personnel in a location that are not expected to move or not expected to move out of an assignable region. An alarm/alert may be used to visually or audibly indicate when the associated object moves outside its assigned motion parameters. Alarms and alerts may also be provided to indicate when there is no motion or an element is idle. For example, transceivers (i.e., nodes) may be placed on equipment or personnel that are not expected to stay idle for an assignable length of time. For instance, if a fire-person is idle for too long in a given location, it may indicate that the person is injured or unconscious and may be in need of help or other assistance. An alarm/alert may then be used to visually and/or audibly indicate when the associated object is idle beyond predefined parameters.

### Display Clipping

To aid in the visual representation and viewing of objects, object trails and structures, the monitoring system may permit the clipping or viewing of an area of view (i.e., the viewing area) presented in the graphical user interface and in particular, in the scene and object graphical view. The viewing area may be isolated to a particular structure or group of structures. For example, the viewing area may be limited to a floor (as shown, for example, in Figure 7), room, stairwell, or group of floors/rooms/structures. The viewing area may be selected by selecting the objects or structures from the graphical display view using a mouse or other device. The viewing area may also be selected by clicking on the on the objects or structures in one of the scrollable list views. Additional mechanisms may be used to permit a user to limit the viewing area such as, for example, showing only floors/rooms that have not been specified as safe, or using the mouse wheel to toggle the view through the various floors.

The monitoring system may also permit the controlling of a clipping plane relative to a viewing direction. This allows a scene such as a building to be sliced opened and thereby allow the insides of the building to be visible via the scene and object graphical view of the graphical user interface. A mouse, keyboard or joystick or other input device may be used to control the position and orientation of the clip plane. Additionally, an object may be selected as a "clipping target" to which clip plane will automatically position itself and follow the object allowing the viewer to continuously "see" the object as it moves through the scene/building. There may also be situations where the selected objects and their respective historical trails should be displayed, but the building and other structures may be clipped as previously described to hide portions of the scene/building and other structures outside of the clipping plane.

### Display modes for scenes/structures

The monitoring system may provide selectable options for displaying the scene and structures in a scene. For example, the monitoring system may present a user (via the graphical user interface) with options (i.e., display modes) for displaying a scene and/or structures and other elements in the scene in as solid structures (i.e., a solid mode), semi-transparent structures (i.e., a semi-transparent mode) and/or wire-frame structures (i.e., a wire-frame mode). Depending on a user's needs, the graphical user interface may permit assigning combinations of display options (solid, semi-transparent, wire-frame) to various sub-structures in a structure/scene.

When presented in a solid mode, structures in the scene and object graphical view may be displayed as opaque objects. Interior sub-structures of a structure (e.g., an interior of a building) in solid mode may be displayed by clipping regions of the structure and/or with the use of a clipping plane. In semi-transparent mode, structures in a scene may be displayed as semi-transparent objects. The graphical user interface may also include features to permit users to adjust the level of transparency to suit their needs. Structures in semi-transparent mode permit the viewing of interior sub-structures without any clipping (although clipping may still be performed even when objects are in the semi-transparent mode). In wire-frame mode, structures are displayed as wire-frame objects. Via the graphical user interface, users may be permitted to adjust the thickness of the lines of the wire frame to suit their needs. Additionally, the thickness of the lines of a wire frame object may diminish with distance to help with depth perception. Wire frame mode allows viewing of the interior of structures without any clipping (although clipping may still be performed in wire-frame mode). Also, hidden line removal may also be used in conjunction with clipping to reduce the clutter of the display.

### Perspective Selection in the Scene and Object Graphical View

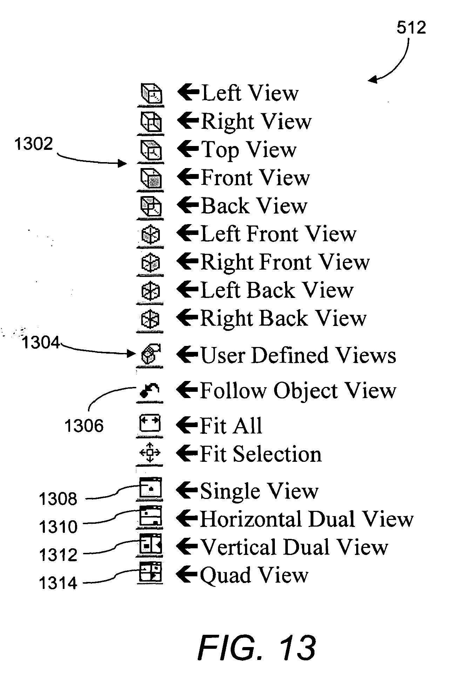

Figure 13 is a schematic diagram illustrating an exemplary view toolbar 512 of a graphical user interface 214 of a monitoring system 200 in accordance with an illustrative embodiment. Via the view toolbar 512, a user of the graphical user interface 214 may select preset views of the scene and objects graphical view 502. Via the view toolbar 512, user defined views may also be selected. For example, user may set the view so that the view dynamically follows an object to allowing the user to "see" the environment in a similar fashion as if the user was at the location of the associated object. The view toolbar 512 may also include multi-view options can be linked together for simultaneous control from different perspectives or manipulated individually.

Each graphical representation of the structure/scene in the scene and object graphical view may be set to a standard view with an assignable special keystroke, tool bar button, or pull down menu entry. The standard views may include, for example: Front, Back, Left, Right, Top, Bottom, Ortho Front-Left, Ortho Front-Right, Ortho Back-Left, Ortho Back-Right. As shown in Figure 13, these selections 1302 may be included in the view toolbar 512 of the graphical user interface 214.

The view of the scene and object graphical view may be set to dynamically follow an object allowing a user to 'see' the environment as the object does. The user may use a mouse, keyboard, joystick or other input device to dynamically adjust the position and orientation of the view of the objects and structures (collectively referred to as dynamic viewing commands). Exemplary dynamic viewing commands that may be presented in the graphical user interface include: Zoom/Scale, Rotate (x,y,z), Position (z, y, z), Zoom to Fit (3D orientation is unchanged, only zoom and position change), Fit Selection (selection may be generated from Graphical or Scroll List views), Zoom to Object/Structure/Location (the object/structure/location may be selected from the Graphical or Scroll List views).

A user may also be able to position and orient the structure to fit their requirements and save the view for later recall via commands made via the graphical user interface 214. As shown in Figure 13, the view toolbar 512 may include a selection 1304 for accessing these user defined views.

Via the graphical user interface, it may be possible to assign a view to follow an object where, as the object moves, the view dynamically adjusts to keep the object visible in the scene and object graphical view 502. The operator may adjust the distance and orientation of the view relative to the object for this feature. The object view can be used in conjunction with an object-based dynamic clipping plane or clipping by structure/region. As shown in Figure 13, the view toolbar 512 may include a selection 1306 for selecting a follow object view feature of the graphical user interface 214.

Via the graphical user interface, multi-view options may also be linked together for simultaneous control from different perspectives or manipulated individually. In particular, an individual field unit or monitor/control system may be afforded the ability to display multiple graphical views of the same site or building. Multiple simultaneous views allow an operator to get a better sense of the 3D nature of the orientation of the objects and structures. The multiple views can operate individually or some/all of the views may be locked together allowing a single operation on one view to simultaneously update all the views 'locked' to the view. As shown in Figure 13, some exemplary selections for multi-view options for the graphical user interface that may be presented in the view toolbar 512 may include: a single view option selection 1308 for presenting a single viewpoint in the scene and object graphical view 502; a horizontal dual view option selection 1310 for presenting two views simultaneously - one on top of the other -in the scene and object graphical view 502; a vertical dual view option selection 1312 for presenting two views simultaneously side by side in the scene and object graphical view 502, and a quad view option selection 1314 for presenting four views simultaneously in the scene and object graphical view 502.

A mouse, keyboard, joystick or other input device can be used to select objects, historical trail instances, structures and/or locations for various operations (for example: zoom to fit or display summary / details) presented in the graphical user interface. One example is a combination of the mouse click with the keyboard 'shift' key can allow the selection of objects either completely contained in a selection region or objects that are contained and intersect the selection region. The control key may be used in conjunction with the mouse click to add /remove individual objects / structures / locations to the selection.

### Linkage between Graphical and Tree List Views

In accordance with one embodiment, selecting one or more objects in a graphical view causes the selection and display of the same objects in the tree list views that are currently displayed in the graphical user display. If an object or group of objects is selected in a tree list view, a keystroke command, a toolbar or a command from pull-down menu may be used to display the objects in the graphical view(s).

### Multiple Operators and Viewing Clients

In one embodiment, the operator node may be coupled to one or more viewing clients via a network connection (e.g., a secure Internet connection) to permit viewing and use of the graphical user interface remotely. In such an embodiment, the command center may include a database for model and object information and a controller that allows multiple distributed operators to simultaneously monitor and/or interact with the database and objects. An inter-client messaging system may be provided for shared viewing between distributed clients (e.g., a second operator can watch the interactions and views as generated and controlled by another operator). The command center node may also include logic for facilitating the use and interaction of clients on multiple platforms such as, for example, Windows, Mac, Linux, Unix, PDA and various Internet browsers (Internet Explorer, Netscape, Mozilla).

### LAN/WAN/Internet transmission

Embodiments of the monitoring system may be capable of unicast and multicast transmissions. More specifically, the position tracking information (object locations, text, audio, video, control info, structure status, alarms, ...) may be distributed using direct connections with unicast point-to-point transmissions or may be distributed using a multicast transmission scheme allowing multiple objects, monitors and controllers to access the information while minimizing the overhead from the transmission side. In one embodiment, the position tracking information may be sent as continuous stream of updated information (for example RTP) or may be supplied on a request basis to the field units or monitor/control systems (for example HTTP or SHTTP).

In yet another embodiment, a password or authentication key may be required to access sensitive information. In another embodiment, data (all or sub-portions thereof) may be encrypted using widely available encryption/decryption systems to ensure security of sensitive information.

In one embodiment, multiple field units and multiple monitor/controllers may be provided to receive, analyze and interact with a single scene. Conversely, a single position tracking application (whether a field unit or monitor/control unit) may view and interact with multiple scenes simultaneously. For example, a supervisor may monitor the operation and status of multiple crews at several locations. A field unit or monitor/controller system (e.g., for description purposes called GUI-ONE) may be locked to another field unit or monitor/controller system (e.g., GUI-TWO) to allow the first system (GUI-ONE) to 'see' everything on the second system's (GUI-TWO's) screen.

### Two transceivers per device for directional info

In one implementation, some devices, such as a camera or gun, can be aimed or oriented with 2 or 3 degrees of freedom. If such devices have two transceivers (e.g., two nodes or a single node with two transceivers) located along the length of the directionality of the device, the orientation of the device can be determined from the relative position of the transceivers.

There are various uses for such an implementation. For example, such an implementation may aid in the mapping of a building's layout. The orientation of a distance-measuring device (such as one that uses audio or light to determine distances) may be used to help dynamically generate a map of a structure or building's layout. Similarly, the orientation of a camera can aid in manually or automatically mapping images from the camera to structures such as walls and floors. The orientation of a gun relative to other objects can be used as an aid in aiming or in automatically detecting a potential friendly fire incident.

### Multi-language Support

The monitoring system may be implemented to support multiple languages and allow the operator to select the language for the graphical user interface and the help system. The position tracking application can include filters/translators to translate captured text and audio dynamically to the operator's language preference. In addition, a language dictionary and spell checking may be included in the application to improve operator accuracy for notes and documentation. Field unit versions (e.g., cell phone, PDA, laptop) and monitor/control units (e.g., cell phone, PDA, laptop, desktop computer, mainframe) may include a help system to aid a user/operator in with the interaction and control of the position tracking application. The help system can be organized into a table of contents, index/glossary of keywords, context sensitive and/or include a search capability. A built in help system and one key access context help assist with training and provide easy reference. Tool-tips may be provided for displayed icons and menu items to further aid the intuitive feel of the graphical user interface.

### 3D Graphics Engine

The monitoring system may include a graphics engine. An implementation of the graphics engine may be built using OpenGL and may take full advantage of most hardware graphics accelerators and/or 3D graphics cards. Using ubiquitous PCs costing from $1000 to $2000, the graphical user interface of the monitoring system may be capable of smoothly rotating and zooming hundreds of objects and their trails in a very complex building / scene model. The OpenGL graphics library may also be supported by various other operating systems including Linux and Unix, which, if necessary, help facilitate porting of the graphical user interface. The graphical user interface may support various lighting options, wire-frame, semi-transparent and solid modeling of the objects, trails and building / scene models, with high quality anti-aliasing of line and polygon edges.

### Scene and Object Database

The monitoring system may include a model and object database that may be organized into lists of classes hierarchically representing the various characteristics of the models and objects. Various relational searches and indexing may also be provided to facilitate efficient generation of the 3D graphical views and the various tree lists. The database design of the monitoring system may be layered so that a SQL or other form of database engine can be added to replace or supplement the current database structure. The database engine may also be designed as a modular component and may be moved to a separate application from a viewing client in order to support multiple clients and a distributed database architecture, such as a web-based database server.

### Scene/Building Model Database

The monitoring system may also include a scene/building database that may support loading scene/ building models from files in a format that supports multiple buildings per scene, buildings can be layered by floors, and sub-structures can be identified including stairwells, rooms, elevators, exits and so on. Buildings, floors and sub-structures can be given names and attributes and be assigned equipment such as fire extinguishers, axes, first aid and fire hoses.

The top layer of the Scene Database may be the CSceneMap. This class contains information about the scene, display characteristics of the scene, a list of floors in the scene (a C3DBuilding layer may optionally be added for multi-building scene environments) and various search / modifiers methods for the scene.

The floors in the scene (or building) may be represented by a list of C3DFloor objects. This class contains identification information about the floor, status of the floor (e.g., unknown, clear, danger, etc.), display characteristics of the floor, a list of structures in the floor, a list of attributes associated with the floor and various search / modifiers methods for the floor.

The structures in the floor may be represented by a list of C3DStructure objects. This class contains identification information about the structure, status of the structure (unknown, clear, danger, ...), display characteristics of the structure, a list of polygons in the structure, a list of attributes associated with the structure and various search / modifiers methods for the structure. The structures may be dynamically created and may represent exits, stairwells, rooms, elevators, doorways and so on.

The attributes in the floor or structure may be represented by a list of C3DAttributes objects in the respective objects. This class contains information about the attribute including an associated unique ID, a name, a type and an attribute value. The attributes may be dynamically created and may represent equipment, text, audio files, images or video files, references to other objects or sensor values.

Polygons in structures and attributes may be represented by a list of C3DPolygon objects. This class contains identification information about the polygon, display characteristics of the polygon, a list of points in the polygon, and various search / modifiers methods for the polygon.

Points in a polygon may be represented by a list of C3DPoint objects. This class contains identification information about the point, an indicator if the point is an internal or external point for hidden line removal and various search / modifiers methods for the point.

### Object/Node Database

The monitoring system may include an object/node database that supports loading object lists from files. Transceiver unique ids may be assigned to objects. Objects may also be assigned categories such as human, equipment and sensor. Objects can be associated with attributes, sensors, equipment and other objects. Objects can be organized into groups for multiple object operations. Display characteristics of the objects and their associated trails can be defined including shape, text, color, size, transparency and duration. Trails can be given start and end values to allow trails to fade in size, color and/or transparency.

A top layer of the Object Database may be the CObjectManager class. This class contains information about the object file, a list of objects and various search/modifiers methods for the object database.

Objects may be represented by a list of C3DObject (C++) objects. A C3DObject class may contain identification information about the object, status of the object, the object's group, display characteristics of the object and its trail, a list of categories of attributes for the object, a list of instances of the object (trail locations) and various search/modifiers methods for the object.

Instances of an object (i.e., trail information) may be represented by a list of C3DObjectInstance objects. The C3DObjectInstance class contains identification information about the time and location of the instance and a list of attributes associated with the instance.

Categories of attributes of an object maybe represented by a list of C3DCategory objects. This class contains information about category, an associated unique ID, a name, a type, a category value and a list of attributes associated with the category. The categories may be dynamically defined and may represent equipment, sensors, feedback to the person in the field through heads-up display or PDA, and so on.

Attributes in an object, instance or category may be represented by a list of C3DAttributes objects. This class contains information about the attribute including an associated unique ID, a name, a type and an attribute value. The attributes may represent equipment, text, audio files, images or video files, references to other objects or sensor values.

### Scene and Object File Formats

Files may be in an easy to manage text based format that support comments and error checking. Each command may begin with a single word command identifier followed by parameters specific to the command. A "#" symbol may be used to start a single line comment and everything after the "#" to the end of the line may be ignored by the file parser. The monitoring system may also have the ability to read from standard model formats to aid in the generation of Scene creation.

### Scene File Format

A scene file format may be implemented as follows:

| | |
|---|---|
| BACKGROUND | colorR, colorG, colorB |
| GROUNDPLANE | colorR, colorG, colorB |
| XYZORDER | xOrder, yOrder, zOrder |
| SCALE | xScale, yScale, zScale |
| | |
| MODEL | name |
| | |
| FLOOR | number minClipValue maxClip Value |
| FLOOR_NAME | name |
| COLOR | colorR, colorG, colorB |
| ATTRIBUTE | category type value |
| | |
| STRUCTURE | number type value name |
| ATTRIBUTE | category type value |
| | |
| POLYGON | number |
| COLOR | colorR, colorG, colorB |
| | |
| POINT | xPos, yPos, zPos (option I for internal) |

### Object File Format

An object file format may be implemented as follows:

| | |
|---|---|
| OBJECT_NAME | name |
| OBJECT_UNIQUEID | number |
| OBJECT_TYPE | typeName |
| OBJECT _PRIORITY | priority (urgent, high, medium,...) |
| OBJECT_GROUP | groupName |
| OBJECT _SHAPE | shape (arrow, sphere, disc, ...) |
| OBJECT _MODEL_FILENAME | modelFilename (for custom shapes) |
| OBJECT _TEXT | text (used instead of shape) |
| OBJECT_COLOR | colorR, colorG, colorB |
| OBJECT _SIZE | size |
| | |
| OBJ_TOKEN_CATEGORY | name type value |
| OBJ_TOKEN_ATTRIBUTE | name type value |
| | |
| TRAIL_SHAPE | shape (sphere, arrow, disc,...) |
| TRAIL_MODEL_FILENAME | modelFileName (for custom shapes) |
| TRAIL_TEXT | trailText (used instead of shape) |
| TRAIL_DISPLAY_PERIOD | timeInSeconds |
| TRAIL_DIPSLAY_DURATION | timeInSeconds |
| TRAIL_INITIAL_COLOR | colorR, colorG, colorB |
| TRAIL_INITIAL_SIZE | size |
| TRAIL_FINAL_COLOR | colorR, colorG, colorB |
| TRAIL_FINAL_SIZE | size |

The following two commands may be used to store object trail information for off-line analysis and training. They may also be used to create virtual simulations of object location and movement (Note: that instances can also have attributes):

| | |
|---|---|
| OBJECT_INSTANCE | uniqueID, time, xPos, yPos, Zpos |
| OBJECT_PATH | uniqueID, duration, xDest, yDest, zDest |

Based on the foregoing specification, the invention may be implemented using computer programming or engineering techniques including computer software, firmware, hardware or any combination or subset thereof. Any such resulting program, having computer-readable code, may be embodied or provided within one or more computer-readable media, thereby making a computer program product, i.e., an article of manufacture, according to the invention. The computer readable media may be, for instance, a fixed (hard) drive, diskette, optical disk, magnetic tape, semiconductor memory such as read-only memory (ROM), etc., or any transmitting/receiving medium such as the Internet or other communication network or link. The article of manufacture containing the computer code may be made and/or used by executing the code directly from one medium, by copying the code from one medium to another medium, or by transmitting the code over a network.

In the present description, the various sub-components of each of the components may also be considered components of the system. For example, particular software modules executed on any component of the system may also be considered components of the system. One skilled in the art of computer science will easily be able to combine the software created as described with appropriate general purpose or special purpose computer hardware to create a computer system or computer sub-system embodying the method of the invention.

While various embodiments have been described above, it should be understood that they have been presented by way of example only, and not limitation. Thus, the breadth and scope of a preferred embodiment should not be limited by any of the above described exemplary embodiments, but should be defined only in accordance with the following claims and their equivalents.

## Claims

1. A method of implementing a monitoring system, comprising:
receiving information about locations of reference nodes in an area;
positioning graphical representations of the reference nodes in a graphical representation of the area at locations corresponding to the locations of the reference nodes in the area utilizing the information about the locations of the reference nodes;
monitoring at least one node in the area; and
displaying a graphical representation of the node in the graphical representation of the area at a location corresponding to the location of the node based on the monitoring.

2. The method of claim 1, wherein the reference nodes are utilized to obtain information about the locations of the reference nodes and for monitoring the node.

3. The method of claim 1, wherein the information about the locations about the reference nodes is utilized to at least one of scale, position and orientate the graphical representation the area.

4. The method of claim 1, wherein the graphical representation of the area is a three-dimensional representation of the area.

5. The method of claim 1, wherein the graphical representation of the area is taken from a viewpoint of the node.

6. The method of claim 1, wherein the monitoring includes monitoring the position of the node in the area.

7. The method of claim 1, wherein the monitoring includes obtaining information sensed by at least one sensor in the node.

8. The method of claim 7, wherein the information sensed by the sensor is associated with positioning information about the node obtained during the monitoring.

9. The method of claim 1, further comprising permitting at least one attribute to be associated to the node.

10. The method of claim 1, further comprising permitting a trigger to be associated with the node, wherein information obtained from the monitoring is utilized to determine whether the trigger is tripped, and wherein an alert is presented when the trigger is tripped.

11. The method of claim 1, wherein the monitoring includes monitoring the node to determine whether the node is stationary for a defined duration, and wherein a notification is presented when the monitoring indicates that the node has been stationary for at least a period of time equal to the defined duration.

12. The method of claim 1, wherein the monitoring includes monitoring the node for movement from a location in the area, and wherein a notification is presented when the monitoring indicates that the node has moved from the location in the area.

13. The method of claim 1, further comprising displaying a graphical representation of a trail indicating a path taken by the at least one node during the monitoring.

14. The method of claim 13, further comprising permitting adjustment of a length of the displayed trail.

15. The method of claim 13, further comprising permitting at least one annotation to be added to the graphical representation of the trail.

16. The method of claim 1, further comprising utilizing information obtained during the monitoring to compute a path from the node to another location in the area, and displaying the path in the graphical representation of the area.

17. The method of claim 16, wherein information about one or more obstacles located in the area is utilized in the computation of the path.

18. The method of claim 16, further comprising presenting directional information to a user located at the node to permit the user to follow the path.

19. A computer program product of implementing a monitoring system, comprising:
computer code for receiving information about locations of reference nodes in an area;
computer code for positioning graphical representations of the reference nodes in a graphical representation of the area at locations corresponding to the locations of the reference nodes in the area utilizing the information about the locations of the reference nodes;
computer code for monitoring at least one node in the area; and
computer code for displaying a graphical representation of the node in the graphical representation of the area at a location corresponding to the location of the node based on the monitoring.

20. A monitoring system, comprising:
a plurality of reference nodes and at least one node located in an area;
logic for receiving information about locations of reference nodes in the area and for monitoring the node in the area;
a graphical user interface for displaying a graphical representation of the area;
logic for positioning graphical representations of the reference nodes in the graphical representation of the area at locations corresponding to the locations of the reference nodes in the area utilizing the information about the locations of the reference nodes; and
logic for displaying a graphical representation of the node in the graphical representation of the area at a location corresponding to the location of the node based on the monitoring.
